# EUROPÄISCHE PATENTANMELDUNG

(11) **EP 2 361 586 A1**
(43) Veröffentlichungstag der Anmeldung: **31.08.2011**
(21) Anmeldenummer: 10001695.5
(22) Anmeldetag: 19.02.2010
(51) Int. Cl.: A61C 8/00

(54) **Implantat zum Implantieren in einen Knochen, insbesondere Kieferknochen, sowie Verfahren zu seiner Herstellung**

(71) Anmelder: Walther, Gerd Axel, Dr., 71034 Böblingen (DE)
(72) Erfinder: Walther, Gerd Axel, Dr., 71034 Böblingen (DE)
(74) Vertreter: Kocher, Mark Werner

(57) **Zusammenfassung**

Es wird ein Implantat aus einem Keramikmaterial oder Metall zum Implantieren in einem Knochen, insbesondere Kieferknochen vorgeschlagen, bei dem wenigstens der in den Knochen eingreifende Bereich des Implantats (10) mit einer eine raue Oberfläche aufweisenden Beschichtung (25) aus einem Keramikmaterial versehen ist. Hierdurch kann ein Implantat, insbesondere ein Implantat aus einem Keramikmaterial, mit einer rauen Oberfläche zur besseren Verankerung in einer Knochenmasse versehen werden, ohne dass mechanische, chemische oder wärmetechnische Beanspruchungen beim Verfahren zur Aufbringung der Beschichtung auftreten.

## Beschreibung

Die Erfindung betrifft ein Implantat aus einem Keramikmaterial oder Metall zum Implantieren in einen Knochen, insbesondere Kieferknochen, sowie ein Verfahren zu seiner Herstellung

Derartige Implantate sind beispielsweise als ein- oder mehrteilige Zahnimplantate aus der DE 10 2005 006 979 A1, der WO 00/54696 oder der EP-A-1 992 304 bekannt. Zum Einschrauben in einen Kieferknochen besitzen sie üblicherweise ein Außengewinde oder andere äußere Verankerungselemente. Weiterhin sind aus der DE-A-199 04 437 oder der EP-A-2 016 923 Gelenk-Prothesen bekannt, deren als Implantate ausgebildete Knochenverankerungsbereiche in die gelenkig miteinander zu verbindenden Knochenbereiche implantiert werden. Allen Implantaten ist es gemeinsam, dass sie eine feste und sichere Verbindung mit dem sie umgebenden Knochenmaterial eingehen müssen. Durch Knochenwachstum werden verbleibende Hohlräume mit der Zeit ausgefüllt, so dass das Implantat dann vollständig von Knochenmasse umgeben ist.

Um einen möglichst festen Halt des häufig konusartig geformten Implantats zu erreichen, hat es sich als wünschenswert herausgestellt, dass das Implantat eine raue Oberfläche besitzt. Wenn das Knochenmaterial durch Wachstum verbleibende Hohlräume um das Implantat herum ausfüllt, so entsteht bei rauer Oberfläche eine bessere formschlüssige Verankerung und dadurch ein festerer Halt des Implantats.

Insbesondere bei Implantaten aus einem Keramikmaterial, beispielsweise Zirkonoxyd, weist das Implantat nach der Herstellung eine relativ glatte Oberfläche mit einer Mittenrauigkeit von ca. 0,3 µm auf. In bekannter Weise wird dann die Oberflächenrauigkeit durch Laserbehandlung oder mechanische oder chemische Oberflächenbehandlung vergrößert. Diese bekannten Behandlungsarten haben insgesamt den Nachteil, dass wegen der in Folge des harten Keramikmaterials erforderlichen starken mechanischen Einwirkungen und/oder Hitzeeinwirkungen die Gefahr von inneren Spannungen bzw. Rissen besteht, die gleich oder im schlimmeren Fall beim im Knochen eingesetzten Zustand zu einem Bruch führen können.

Eine Aufgabe der vorliegenden Erfindung besteht darin, ein Implantat zu schaffen und ein Verfahren zu seiner Herstellung aufzuzeigen, bei dem eine raue Oberfläche erzeugt werden kann, ohne dass das Implantat durch mechanische Einwirkung oder Hitzeeinwirkung in unerwünschter Weise beeinträchtigt wird.

Diese Aufgabe wird erfindungsgemäß durch ein Implantat mit den Merkmalen des Anspruchs 1 und durch ein Verfahren mit den Merkmalen des Anspruchs 8 gelöst.

Die Vorteile der erfindungsgemäßen Lösung bestehen insbesondere darin, dass das Implantat beim Aufbringen der Beschichtung und damit Herstellen der rauen Oberfläche weder mechanisch, noch wärmemäßig oder chemisch beeinträchtigt oder beschädigt wird. Hierdurch wird eine wesentlich verbesserte Haltbarkeit, insbesondere bei Keramikimplantaten, erzielt. Durch die Art der Beschichtung und die wählbaren Parameter kann die Oberflächenrauigkeit in gewünschter Weise eingestellt bzw. erreicht werden. Bei keramischen Implantaten besteht die Beschichtung im Wesentlichen aus demselben Material oder zumindest derselben Materialstruktur, so dass eine gute Haltbarkeit und Haftung erzielt wird. Bei der Beschichtung eines metallischen Implantats wird durch die Beschichtung eine weiße bzw. helle optisch akzeptablere Oberfläche erzielt. Darüber hinaus wird durch die keramische Oberflächenbeschichtung eine gewebefreundlichere Oberfläche im Vergleich zu einer rein metallischen Oberfläche erreicht.

Durch die in den Unteransprüchen aufgeführten Maßnahmen sind vorteilhafte Weiterbildungen und Verbesserungen des im Anspruch 1 angegebenen Implantats und des im Anspruch 8 angegebenen Verfahrens möglich.

Die Beschichtung besitzt bevorzugt eine Mittenrautiefe von 1,5 - 20 µm, insbesondere 1,5 - 10 µm. Zum Vergleich weist eine unbehandelte Implantatoberfläche beispielsweise eines Keramikimplantats eine Mittenrautiefe von 0,3 µm auf.

Bevorzugt weist nur der in den Knochen eingreifende Bereich des Implantats die Beschichtung auf, da es nur dort auf eine feste Verankerung ankommt. Der darüber hinaus stehende Bereich des Implantats sollte dagegen eine möglichst glatte Oberfläche aufweisen, um Beschädigungen und Reizungen des Zahnfleisches zu vermeiden. Bei einem beschichteten Metallimplantat kann dieser überstehende Bereich bevorzugt mit einer glatten Beschichtung versehen sein.

Das Implantat besteht zweckmäßigerweise aus einer Zirkon-oder Aluminiumkeramik oder aus einem Metall, wie Titan oder Edelstahl. Dabei ist das Keramikmaterial der Beschichtung ein Zirkon- oder Aluminium-Keramikmaterial.

Die Keramikbeschichtung ist in vorteilhafter Weise als Plasmabeschichtung oder gesinterte, mit einem Binder aufgebrachte Pulverbeschichtung ausgebildet.

Das Implantat ist dabei bevorzugt als Zahnimplantat oder Implantat einer Gelenkprothese ausgebildet.

Im Falle der Beschichtung als Plasmabeschichtung wird die Beschichtung zweckmäßigerweise durch Plasmaspritzen, insbesondere atmosphärisches Plasmaspritzen aufgebraucht. Dabei wird bevorzugt ein ZrO₂-Spritzpulver verwendet, das insbesondere eine Korngröße von 20 - 150 *µ*m besitzt.

Im Falle der Ausbildung der Beschichtung als Pulverbeschichtung wird in vorteilhafter Weise ein Keramikpulver mit einem Bindemittel aufgebracht und anschließend wird ein Sintervorgang durchgeführt. Die Aufbringung der Suspension aus Keramikpulver und Bindemittel erfolgt bevorzugt durch Tauchen, Rakeln oder Flow-Coating.

Als Temperatur für den Sintervorgang hat sich eine Temperatur zwischen 1.100° C - 1.600° C, insbesondere 1.300° C - 1.450° C als am günstigsten erwiesen.

Als Keramikpulver eignen sich insbesondere vorgesinterte Keramikkörner mit einem Durchmesser von 50 - 150 *µ*m.

Als Bindemittel eignet sich ein Silan, das bevorzugt einen SiO₂-Anteil aufweist.

Ein Beispiel eines Keramikimplantats ist in der Zeichnung dargestellt und in der nachfolgenden Beschreibung näher erläutert. Es zeigen:

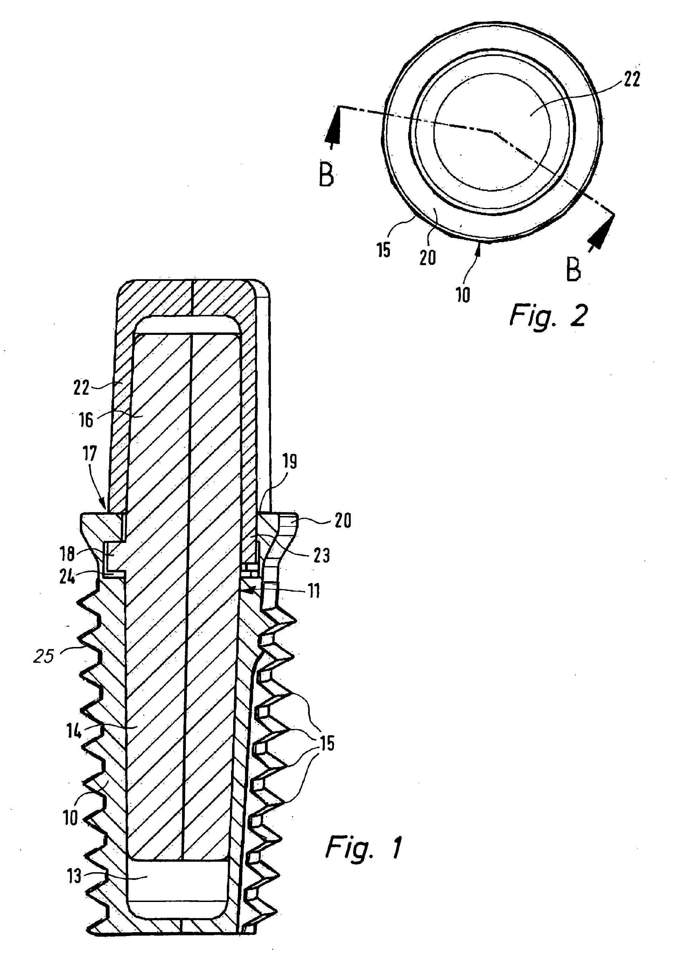

- Figur 1: eine Schnittdarstellung eines mehrteiligen Zahnimplantats gemäß der Schnittlinie B-B in Figur 2 und
- Figur 2: die Draufsicht auf das in Figur 1 dargestellte Zahnimplantat.

Das in den beiden Figuren als Beispiel eines Implantats dargestellte Zahnimplantat besteht aus einem in den menschlichen Kieferknochen einsetzbaren bzw. einschraubbaren Implantatkörper 10, einem in diesem Implantatkörper 10 verrastbaren Implantatpfosten 11 und einem auf dem Implantatpfosten 11 aufsetzbaren, mit einem nicht dargestellten zu verankernden festsetzenden Zahnersatz, wie einer Einzelkrone, einem Brückenpfeiler oder dergleichen versehenen Kopplungsglied 22. Diese Bestandteile bestehen ganz oder zum Teil aus einem Keramikmaterial auf der Basis von Zirkonoxyd oder einer Zirkonoxyd-/Aluminiumoxyd-Mischung oder Aluminiumoxyd.

Der Implantatkörper 10 besitzt ein sich konisch zum Inneren hin verjüngendes Sackloch 13 zur Aufnahme eines sich entsprechend verjüngenden Halteabschnitts 14 des Implantatpfostens 11. Umfangsseitig ist der Implantatkörper 10 mit einem konischen und/oder selbstschneidenden Außengewinde 15 versehen, das zum Einschrauben in eine Kieferbohrung dient. Anstelle des Außengewindes 15 kann prinzipiell auch eine andere bekannte Außenstruktur zur Verankerung im Kieferknochen dienen.

Dem Halteabschnitt 10 des Implantatpfostens 10 fügt sich einstückig ein Tragabschnitt 16 an, der im in den Implantatkörper 10 eingesetzten Implantatpfosten aus dem Implantatkörper 10 herausragt und zur Halterung eines festsitzenden Zahnersatzes dient. Auch der Tragabschnitt 16 verjüngt sich zum freien Ende hin konusförmig, wie dies auch beim Halteabschnitt 14 der Fall ist. Alternativ zur Konusgestalt sind jedoch auch andere Geometrien möglich, wie zylindrische oder nicht rotationssymmetrische Geometrien.

Zur Fixierung des Implantatpfostens 11 im Implantatkörper 10 dient eine als Steck-Drehverbindung ausgebildete Renkverbindung 17 bzw. Bajonettverbindung. Hierzu besitzt der Implantatpfosten 11 etwa mittig einen Kranz von radial abstehenden Verriegelungszähnen 18, während am offenen Endbereich des Implantatkörpers 10 eine Komplementärkontur 19 an einem Abschlussflansch 20 angeordnet ist, die entsprechende nutartige Durchsteckausnehmungen besitzt. Zur gegenseitigen Verriegelung wird der Implantatpfosten 11 so in den Implantatkörper 10 eingeführt, dass die Verriegelungszähne 18 durch die Durchsteckausnehmungen der Komplementärkontur 19 hindurchgeführt werden. Anschließend wird der Implantatpfosten 11 um einen Winkel gedreht, der im Wesentlichen der Winkelbreite eines Verriegelungszahns 18 entspricht. Hierdurch gelangen die Verriegelungszähne 18 hinter die Komplementärkontur 19, wobei der konusförmige Halteabschnitt 14 in Verbindung mit dem entsprechend gestalteten Sackloch 13 im Implantatkörper 10, den Verriegelungszähnen 18 und der Komplementärkontur 19 so geformt ist, dass bei dieser Drehung der Verriegelungszähne 18 in einer Ringnut 24 unmittelbar hinter der Komplementärkontur 19 eine Verklemmung stattfindet, d.h., der Halteabschnitt 14 des Implantatpfostens 11 wird dabei in das Sackloch 13 eingedrückt und verklemmt sich dadurch.

Die Zahl der Verriegelungszähne 18 und die entsprechende Anzahl von Durchsteckausnehmungen der Komplementärkontur 19 kann variieren. Im einfachsten Fall genügt ein einziger Verriegelungszahn 18. Besser ist jedoch eine größere Zahl von Verriegelungszähnen 18. Die Verriegelungszähne 18, die Durchsteckausnehmungen der Komplementärkontur 19 und die Ringnut 24 können unterschiedliche Geometrien besitzen und z.B. neben einer rechteckigen bzw. quaderförmigen Gestalt Halbmond, dreieckig, elliptisch oder dergleichen ausgebildet sein. Die Renkverbindung 17 kann prinzipiell auch an einer anderen Stelle angeordnet sein und beispielsweise weiter im Inneren des Implantatkörpers 10 angeordnet sein.

Ein topfartig geformtes Kopplungsglied 22 wird im Zahnlabor mit einem festsitzenden Zahnersatz versehen, beispielsweise mit einer Einzelkrone, einem Brückenpfeiler oder dergleichen. Das mit dem nicht dargestellten Zahnersatz versehene Kopplungsglied 22 wird dann auf den konusförmigen Tragabschnitt 16 des Implantatpfostens 11 aufgesetzt, so dass dieser Tragabschnitt 16 in eine entsprechend geformte Ausnehmung des Kopplungsglieds 22 eingreift. Vom Rand des offenen Endes des Kopplungsglieds 22 aus erstrecken sich zapfenartige Vorsprünge 23 in axialer Richtung, die so geformt und angeordnet sind, dass sie in die Durchsteckausnehmungen der Komplementärkontur 19 eingesteckt werden können. Ihre Länge ist so bemessen, dass sie noch zwischen die Verriegelungszähne 18 eingreifen und dadurch eine Drehung oder Rückdrehung des Implantatpfostens 11 blockieren. Der Implantatpfosten 11 ist dadurch sowohl in axialer Richtung, als auch in Drehrichtung verriegelt. Die Zahl der zapfenartigen Vorsprünge 23 entspricht bevorzugt der Zahl und Querschnittsgestalt der Durchsteckausnehmungen der Komplementärkontur, so dass der Implantatkörper 11 völlig abgeschlossen ist und nichts eindringen kann, beispielsweise keine Keime oder dergleichen.

Der Implantatkörper 10 ist außenseitig mit einer Keramikbeschichtung 25 versehen. Diese Keramikbeschichtung 25 besitzt eine raue Oberfläche bzw. eine Oberflächenrauigkeit, die wesentlich größer als die des Implantatrohlings ist. Ein keramischer Implantatrohling besitzt im Wesentlichen eine Oberflächenrauigkeit mit einer Mittenrautiefe von ca. 0,3 µm. Die Beschichtung besitzt eine Mittenrautiefe von 1,5 - 20 µm, vorzugsweise 1,5 - 10 µm. Sie wird beispielsweise oder bevorzugt durch Plasmabeschichtung oder gesinterte, mit einem Binder aufgebrachte Pulverbeschichtung aufgebracht, wie dies nachstehend noch näher erläutert wird. Auch das Keramikmaterial der Keramikbeschichtung 25 besteht aus einem Zirkon-oder Aluminium-Keramikmaterial.

Die Keramikbeschichtung 25 erstreckt sich nur über den Außenbereich des Implantatkörpers 10, der in den Kieferknochen eingreifen soll. Der darüber hinausstehende Bereich, der vom Zahnfleisch umgriffen wird, soll dagegen eine möglichst glatte Oberfläche aufweisen und ist daher nicht beschichtet.

Das beschriebene Implantat ist als mehrteiliges Keramikimplantat ausgebildet. Alternativ hierzu kann die erfindungsgemäße Beschichtung auch an Implantaten mit einer abweichenden Zahl von Teilen angebracht werden, beispielsweise an einteiligen Implantaten oder mehrteiligen Implantaten, die nicht über eine Renk-Verbindung miteinander verbunden sind, sondern über Schraub- oder Klebeverbindungen. Weiterhin kann es sich auch um ein metallisches Implantat handeln, beispielsweise um ein Implantat aus Titan oder Edelstahl. Hierbei trägt die Keramikbeschichtung zu einem gewebefreundlicheren Kontakt mit dem umgebenden Knochenmaterial bei und dient auch zur optischen Abdeckung des gewöhnlich dunklen Metallkörpers. Der über das Knochengewebe überstehende Bereich des metallischen Implantats kann dann mit einer Beschichtung mit glatter Oberfläche versehen werden im Gegensatz zur übrigen Beschichtung mit rauer Oberfläche.

Bei der Plasmabeschichtung wird beispielsweise das atmosphärische Plasmaspritzen (APS) eingesetzt, wobei selbstverständlich auch andere bekannte Verfahren zur Plasmabeschichtung möglich sind. Beim atmosphärischen Plasmaspritzen wird ein Spritzzusatzwerkstoff, hier ein Zirkon- oder Aluminium-Keramikmaterial, in einem Plasmastrahl an- oder aufgeschmolzen. Die kinetische Energie der Partikel entsteht durch die thermische Expansion des Plasmagases. Das Plasma wird durch einen Lichtbogen, der zwischen zwei Elektroden brennt, erzeugt. Als Plasmagas werden meist Gase wie Helium, Stickstoff, Wasserstoff oder Argon verwendet. Die Pulvereindüsung in den Plasmastrahl erfolgt inner- oder außerhalb der Düse mit Hilfe eines Trägergases. Das APS-Verfahren ist universell einsetzbar und eignet sich insbesondere für die Verarbeitung von Oxydkeramiken, wie Zirkonoxyd oder Aluminiumoxyd. Als Spritzpulver wird beispielsweise Zirkonoxyd mit einer Korngröße zwischen 20 und 150 µm verwendet, um die gewünschte Oberflächenrauigkeit zu erzielen.

Bei der Pulverbeschichtung wird zunächst eine Suspension aus einem Keramikpulver und einem Bindemittel erzeugt. Als Keramikpulver werden vorgesinterte Keramikkörper mit einem Durchmesser zwischen 50 und 150 µm verwendet, um die gewünschte Oberflächenrauigkeit zu erzielen. Als Bindemittel dient ein Silan mit einem SiO₂-Anteil Hierbei hat sich vor allem das 3-aminopropyl-triethoxysilan und ein 15 prozentiger SiO₂-Anteil als besonders geeignet erwiesen. Abweichungen von diesen Werten sind selbstverständlich ebenfalls möglich. Diese gelartige Suspension wird dann auf das zu beschichtende Implantat bzw. den zu beschichtenden Implantatkörper 10 durch Tauchen, Rakeln oder Flow-Coating aufgebracht. Anschließend erfolgt ein Sintervorgang bei einer Temperatur zwischen 1.100° C und 1.600° C, insbesondere zwischen 1.300° C und 1.450° C.

Die Erfindung ist selbstverständlich nicht nur für Zahnimplantate anwendbar, sondern für alle in Knochen zu verankernden Implantaten, beispielsweise die Implantate von Gelenkprothesen.

Es hat sich als besonders zweckmäßig und günstig erwiesen, wenn das Keramikmaterial der Beschichtung mit dem Keramikmaterial des Implantats übereinstimmt oder zumindest sehr ähnlich ist.

## Patentansprüche

1. Implantat aus einem Keramikmaterial oder Metall zum Implantieren in einen Knochen, insbesondere Kieferknochen, **dadurch gekennzeichnet, dass** wenigstens der in den Knochen eingreifende Bereich des Implantats (10) mit einer eine raue Oberfläche aufweisenden Beschichtung (25) aus einem Keramikmaterial versehen ist.

2. Implantat nach Anspruch 1, **dadurch gekennzeichnet, dass** die Beschichtung (25) eine Mittenrautiefe von 1,5 µm - 20 µm besitzt, insbesondere 1,5 µm - 10 µm.

3. Implantat nach Anspruch 1 oder 2, **dadurch gekennzeichnet, dass** nur der in den Knochen eingreifende Bereich des Implantats (10) die Beschichtung (25) aufweist.

4. Implantat nach einem der vorhergehenden Ansprüche, **dadurch gekennzeichnet, dass** es aus einer Zirkon- oder Aluminiumkeramik oder aus einem Metall wie Titan oder Edelstahl besteht.

5. Implantat nach einem der vorhergehenden Ansprüche, **dadurch gekennzeichnet, dass** die Beschichtung (25) als Plasmabeschichtung oder gesinterte, mit einem Binder aufgebrachte Pulverbeschichtung ausgebildet ist.

6. Implantat nach einem der vorhergehenden Ansprüche, **dadurch gekennzeichnet, dass** es als Zahnimplantat oder Implantat einer Gelenkprothese ausgebildet ist.

7. Implantat nach einem der vorhergehenden Ansprüche, **dadurch gekennzeichnet, dass** das Keramikmaterial der Beschichtung (25) ein Zirkon- oder Aluminium-Keramikmaterial ist.

8. Verfahren zur Herstellung eines Implantats nach einem der vorhergehenden Ansprüche, **dadurch gekennzeichnet, dass** das Implantat (10) mit einem Keramikmaterial so beschichtet wird, dass eine raue Oberfläche gebildet wird.

9. Verfahren nach Anspruch 8, **dadurch gekennzeichnet, dass** die Beschichtung (25) durch Plasmaspritzen, insbesondere atmosphärisches Plasmaspritzen aufgebracht wird.

10. Verfahren nach Anspruch 9, **dadurch gekennzeichnet, dass** ein ZrO₂-Spritzpulver bei dem Beschichtungsvorgang verwendet wird, das insbesondere eine Korngröße zwischen 20 *µ*m und 150 *µ*m aufweist.

11. Verfahren nach Anspruch 8, **dadurch gekennzeichnet, dass** ein Keramikpulver mit einem Bindemittel aufgebracht und anschließend ein Sintervorgang durchgeführt wird.

12. Verfahren nach Anspruch 11, **dadurch gekennzeichnet, dass** die Aufbringung der Suspension aus Keramikpulver und Bindemittel durch Tauchen, Rakeln oder Flow-Coating erfolgt.

13. Verfahren nach Anspruch 11 oder 12, **dadurch gekennzeichnet, dass** der Sintervorgang bei einer Temperatur zwischen 1.100° C und 1.600° C, insbesondere zwischen 1.300° C und 1.450° C durchgeführt wird

14. Verfahren nach einem der Ansprüche 11 bis 13, **dadurch gekennzeichnet, dass** als Keramikpulver vorgesinterte Keramikkörner mit einem Durchmesser von 50 *µ*m - 150 *µ*m verwendet wird.

15. Verfahren nach einem der Ansprüche 11 bis 14, **dadurch gekennzeichnet, dass** als Bindemittel ein Silan verwendet wird, das insbesondere einen SiO₂-Anteil aufweist.
